(19) Europäisches Patentamt / European Patent Office / Office européen des brevets

(11) **EP 3 843 043 B1**

(12) **EUROPEAN PATENT SPECIFICATION**

(45) Date of publication and mention of the grant of the patent:
**13.07.2022 Bulletin 2022/28**

(21) Application number: **19306761.8**

(22) Date of filing: **23.12.2019**

(51) International Patent Classification (IPC):
**G06T 11/00** (2006.01)   **G06T 19/00** (2011.01)
**G06T 7/70** (2017.01)   **G02C 13/00** (2006.01)

(52) Cooperative Patent Classification (CPC):
**G06T 11/00; G02C 13/003; G06T 7/70;**
G06T 2207/30201

(54) **APPARATUS, METHOD, AND COMPUTER-READABLE STORAGE MEDIUM FOR EXPANDING AN IMAGE DATABASE FOR EVALUATION OF EYEWEAR COMPATIBILITY**

VORRICHTUNG, VERFAHREN UND COMPUTERLESBARES SPEICHERMEDIUM ZUR ERWEITERUNG EINER BILDDATENBANK ZUR BEWERTUNG DER BRILLENVERTRÄGLICHKEIT

APPAREIL, PROCÉDÉ ET SUPPORT D'INFORMATIONS LISIBLE SUR ORDINATEUR PERMETTANT D'AGRANDIR UNE BASE DE DONNÉES D'IMAGES POUR ÉVALUER LA COMPATIBILITÉ DES LUNETTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.06.2021 Bulletin 2021/26**

(73) Proprietor: **ESSILOR INTERNATIONAL**
**94220 Charenton-Le-Pont (FR)**

(72) Inventors:
• **ALLIONE, Pascal**
**94220 CHARENTON-LE-PONT (FR)**
• **BONNIN, Thierry**
**94220 CHARENTON-LE-PONT (FR)**

(74) Representative: **Cabinet Novitech**
**188 Grande rue Charles de Gaulle**
**94130 Nogent-sur-Marne (FR)**

(56) References cited:
WO-A1-00/16683   US-A1- 2012 313 955
US-A1- 2018 005 448

EP 3 843 043 B1

**Description**

BACKGROUND

FIELD OF THE DISCLOSURE

The present disclosure relates to eyewear and, specifically, to generating an image database for evaluation of eyewear compatibility.

DESCRIPTION OF THE RELATED ART

During the selection of new visual equipment, or eyewear, a user is often left to self-reflection in determining the aesthetics of new eyewear on their face. Moreover, when deciding between multiple pieces of eyewear, a user may find it difficult to decide which piece is most attractive, has the most utility, or is the most suited to their particular facial bone structure and features. At the same time, the user may be grappling with their own opinion of the new eyewear on their face and the hypothetical opinions of third parties (e.g., friends, family, professionals, etc.) regarding the fit of the new eyewear on their face.

In order to provide an eyewear recommendation tool that can, upon receiving an image of a user wearing eyewear, generate a fit evaluation or recommendation based on the unique traits of the user and the eyewear, large image databases must be compiled so that an algorithm may be trained to generate an accurate fit evaluation when presented with an unknown combination of user and eyewear. Such large image databases may include thousands of images of users wearing eyewear and may, understandably, be arduously assembled by acquisition of photographs of each desired combination of user and eyewear. For instance, if an eyewear inventory includes twenty-five eyewear possibilities, a corresponding database may include at least multiples of twenty-five photographs wherein each eyewear is worn by a given user. It can be appreciated that acquiring real photos of each of these combinations is, at best, impractical, and may be made more so when one considers the diverse range of ages, genders, ethnicities, and the like needed to generate a comprehensive database. US2012313955 discloses virtual try- on using a 3D model of the glasses.

In view of the above, a human-effort light approach for expanding an image database for evaluation of eyewear compatibility is needed in order to allow for comprehensive and accurate evaluation of diverse combinations of users and eyewear. The present disclosure describes a series of solutions thereto.

The foregoing "Background" description is for the purpose of generally presenting the context of the disclosure. Work of the inventors, to the extent it is described in this background section, as well as aspects of the description which may not otherwise qualify as prior art at the time of filing, are neither expressly or impliedly admitted as prior art against the present invention.

SUMMARY

The present disclosure relates to an apparatus, method and computer-readable storage medium for expanding an image database for evaluation of eyewear compatibility. The invention is defined by the appended claims.

BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:

FIG. 1 is an illustration of a user wearing an eyeglass frame, according to an exemplary embodiment of the present disclosure;

FIG. 2 is an exemplary image database, according to an exemplary embodiment of the present disclosure;

FIG. 3 is a flow diagram of a method for generating eye care professional-based evaluations of eyewear compatibility, according to an exemplary embodiment of the present disclosure;

FIG. 4 is an illustration of a survey administered to eye care professionals, according to an exemplary embodiment of the present disclosure;

FIG. 5 is a flow diagram of method for expanding an image database for evaluation of eyewear compatibility, according to an exemplary embodiment of the present disclosure;

FIG. 6A is a flow diagram of a sub process of a method for expanding an image database for evaluation of eyewear compatibility, according to an exemplary embodiment of the present disclosure;

FIG. 6B is an illustration of a received frame image, according to an exemplary embodiment of the present disclosure;

FIG. 6C is an illustration of a processed frame image, according to an exemplary embodiment of the present disclosure;

FIG. 7 is a flow diagram of a sub process of a method for expanding an image database for evaluation of eyewear compatibility, according to an exemplary embodiment of the present disclosure;

FIG. 8A is a flow diagram of a sub process of a method for expanding an image database for evaluation of eyewear compatibility, according to an exemplary embodiment of the present disclosure;

FIG. 8B is an illustration of a filter image, according to an exemplary embodiment of the present disclosure;

FIG. 8C is an illustration of a processed frame image, according to an exemplary embodiment of the present disclosure;

FIG. 8D is an illustration of a processed filter image, according to an exemplary embodiment of the present disclosure;

FIG. 9A is an illustration of a processed frame image, according to an exemplary embodiment of the present disclosure;

FIG. 9B is an illustration of a processed filter image, according to an exemplary embodiment of the present disclosure;

FIG. 9C is an illustration of a merging of a processed filter image and a processed frame image, according to an exemplary embodiment of the present disclosure;

FIG. 10A is an exemplary image of a user, according to an embodiment of the present disclosure;

FIG. 10B is an illustration of a merging of a processed filter image and a processed frame image, according to an exemplary embodiment of the present disclosure;

FIG. 10C is an illustration of an overlay of an exemplary image of a user and a merging of a processed filter image and a processed frame image, according to an exemplary embodiment of the present disclosure;

FIG. 11 is a flow diagram of an exemplary implementation of a method for expanding an image database for evaluation of eyewear compatibility; and

FIG. 12 is hardware configuration of a database generation device, according to an exemplary embodiment of the present disclosure.

DETAILED DESCRIPTION

The terms "a" or "an", as used herein, are defined as one or more than one. The term "plurality", as used herein, is defined as two or more than two. The term "another", as used herein, is defined as at least a second or more. The terms "including" and/or "having", as used herein, are defined as comprising (i.e., open language). The terms "eyewear", "equipment", "equipments", "eyeglass frame", "eyeglass frames", "eyeglass", "eyeglasses", and "visual equipments" may be used interchangeably to refer to an apparatus having both a frame and a lens. The term "visual equipment" may be used to refer to a single visual equipment while the term "visual equipments" may be used to refer to more than one visual equipment. Reference throughout this document to "one embodiment", "certain embodiments", "an embodiment", "an implementation", "an example" or similar terms means that a particular feature, structure, or characteristic described in connection with the embodiment is included in at least one embodiment of the present disclosure. Similarly, the terms "image of a face" and "image of a face of a person" are corresponding terms that may be used interchangeably. Thus, the appearances of such phrases or in various places throughout this specification are not necessarily all referring to the same embodiment. Furthermore, the particular features, structures, or characteristics may be combined in any suitable manner in one or more embodiments without limitation.

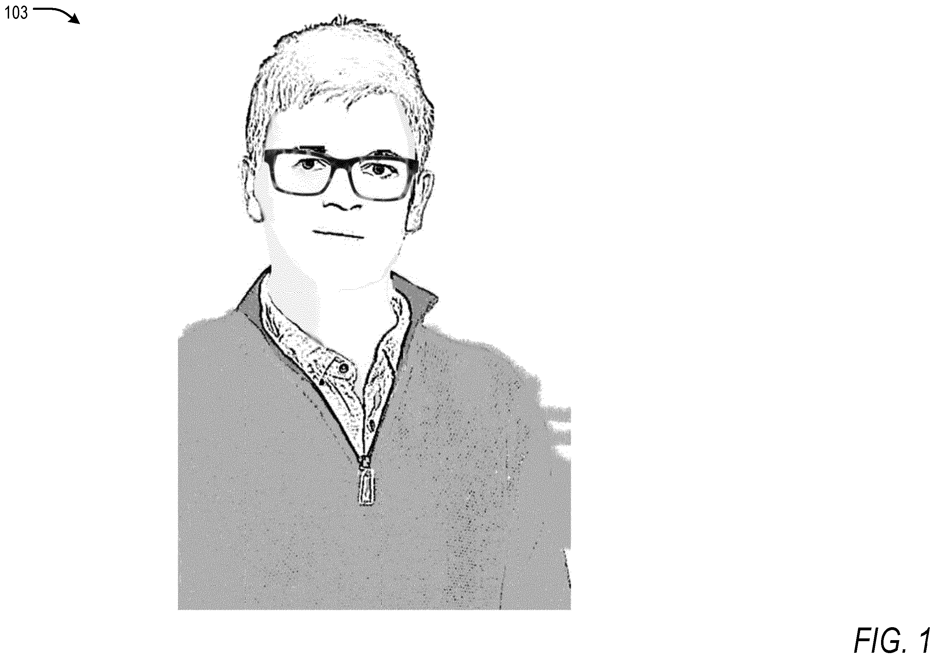

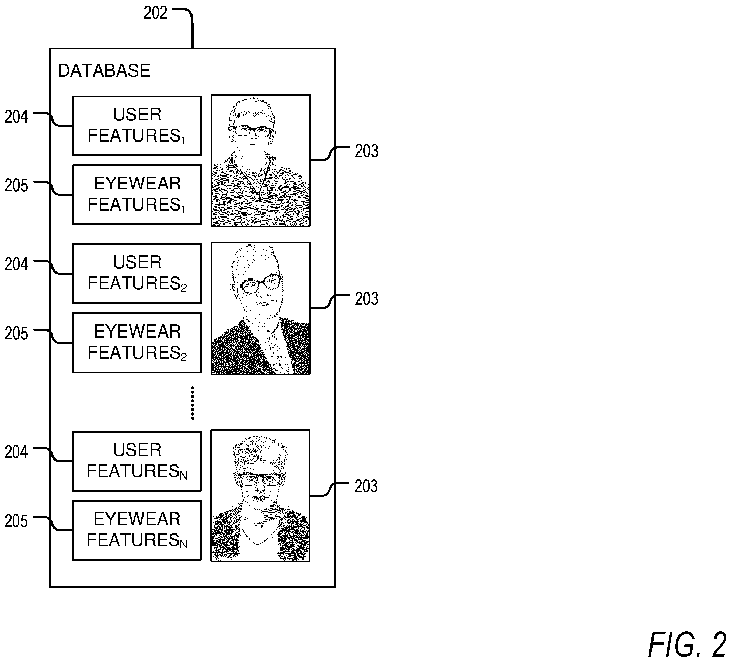

When selecting new eyewear, users may desire a third party to provide an opinion regarding eyewear aesthetics as well as structural fit in view of optical functionality. In order to provide a robust recommendation, recommendation models based on statistical methods, or other learning processes, can provide robust recommendations through evaluation and training on a reference database of 'labeled' images. For instance, a learning discriminant analysis (LDA) approach may be applied to a reference database to allow for automated analysis of a new image. With reference to FIG. 1 and FIG. 2, a reference database 202 may include 'labeled' images of users wearing eyewear 103, 203, the labels reflecting an evaluation of relationships between user features 204 and eyewear features 205. The LDA may be trained to associate positional relationships of the eyewear features 205 and user features 204 within the 'labeled' images as being acceptable or not. In an example, the 'labeled' images of the reference database may be 'labeled by a specific third party group (e.g., eye care professionals) and may include evaluations of specific features of the image or an evaluation of general fit of eyewear and the face of the person in the image.

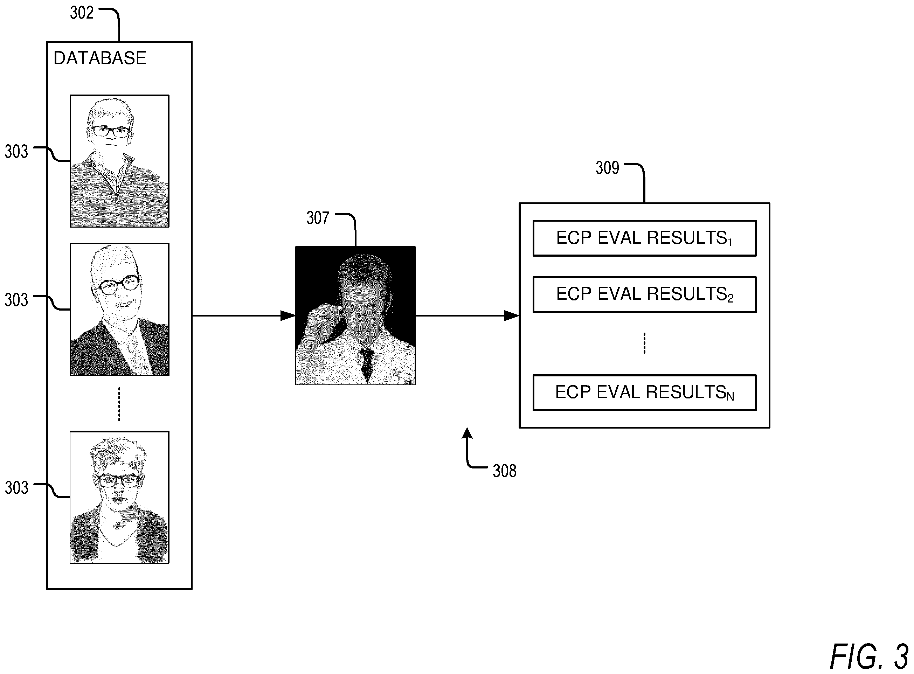

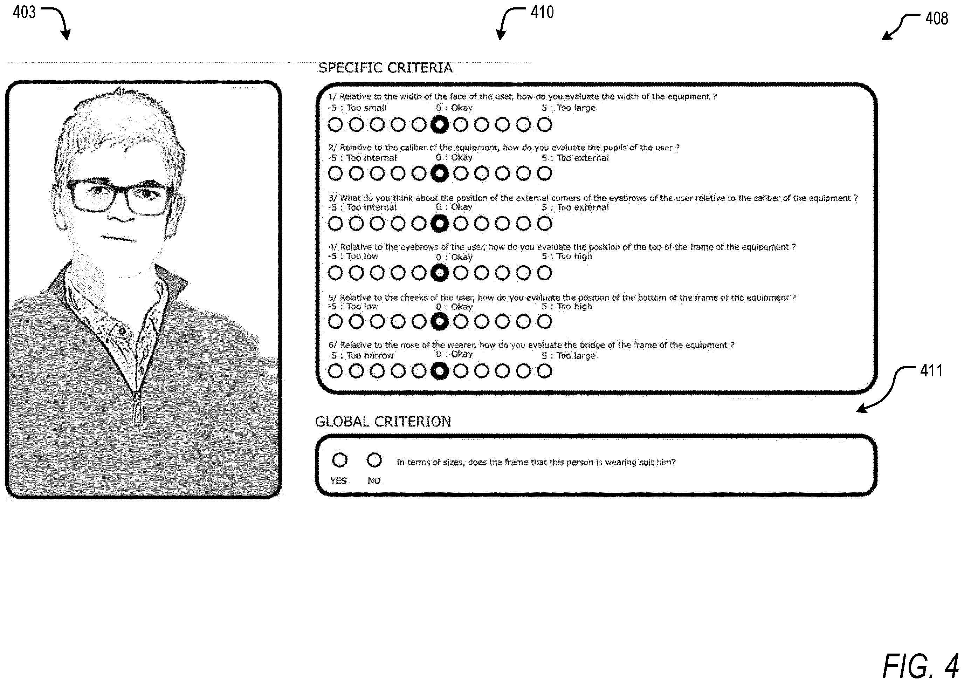

In order to provide accurate recommendations for a diverse population of users, the number of representative, 'labeled' images of the reference database needs to be increased and the composition thereof needs to be expanded. To this end, the reference database needs to include a corpus of images including a variety of age groups, genders, ethnicities, and the like. The reference database must also be dynamic and able to include new eyewear designs, new features (e.g., anti-reflective coating, colors, mirrors, etc.), new mounting models/rules, and new fitting models/rules. With reference now to FIG. 3, in generating the recommendation model, the thousands of images 303 of the reference database 302 must then be evaluated by, for instance, eye care professionals (ECPs) 307. Results of the ECP evaluation 309 then provide an expert evaluation 308, for each image 303 of the reference database 302, of the fit of the eyewear to the face of the user. An exemplary ECP evaluation 408 is shown in FIG. 4, wherein an image of a user wearing eyewear 403 can be graded according to specific criteria 410 (e.g., width of frame to width of face) and/or global criteria 411 (e.g., does the eyewear fit or not). The ECP evaluation 408 may include questions about compatibility between the face of the user and the eyewear (e.g., shape, size, color, mounting of the eyewear, fitting of the eyewear, etc.).

In an embodiment, the ECP evaluation 408 includes a series of images of the user wearing eyewear 403 and, alongside each image, a series of questions regarding specific points of suitability of the eyewear and the face of the person. For each question, the ECP may be given a limited number of possible answers. In an example, it may be a scale between -5 and +5, a scale between 0 and 10, or a choice of an item in a set of N items. For instance, as exemplary question and answers, an ECP may be asked: "Relative to the width of the face of the user, how do you evaluate the width of the equipment?" (a) too small, (b) okay, or (c) too large. In this way, the images of the reference database can be 'labeled'.

It can be appreciated that generating such a large reference database of 'labeled' images, however, would be costly, time-consuming and largely impractical, requiring thousands of images to be acquired of real people wearing real eyewear. Accordingly, the present disclosure provides an apparatus, method, and computer-readable storage medium for expanding an image database for evaluation of eyewear compatibility. In this way, the time and expense involved with creation and enrichment of the reference database can be reduced.

According to an embodiment, the present disclosure relates to a method for expanding an image database for evaluation of eyewear compatibility. For instance, a single image of a face of a user may be modified in order to generate a plurality of images of the face of the user wearing a plurality of eyewear designs, each of the plurality of eyewear designs being processed according to one or more eyewear specifications, fitting models, mounting models, and the like. The resulting plurality of images, therefore, can be uniquely evaluated by an ECP.

As above, the method is applied to a single image of a face of a user. The method comprises receiving a user image of a face of a user, receiving a frame image of a frame of eyewear from a plurality of images of frames of eyewear, processing, by processing circuitry, the received frame image, defining, within the processed frame image, a left boundary and a right boundary of the anterior face of the frame of the eyewear, receiving a filter image of a filter modeling a lens coating of the eyewear, processing, by the processing circuitry, the received filter image, merging the processed frame image and the processed filter image, and overlaying, by the processing circuitry, the merged processed frame image and the processed filter image onto the received user image of the face of user.

In generating the plurality of images, or 'virtual try on' images, the methods described herein minimize the number of real photographs that need be acquired. In an example, the methods described herein require only a single image of each user and a single image of each eyewear. The images may be a profile image or a portrait image, the single image of each user including a referential measurement to be able to rescale the image. The acquired images can then be processed in combination and in addition to consideration of filtering models that reflect varying lens treatments or coatings and mounting models and/or fitting models that reflect physical positioning of the eyewear on the face of the user. The mounting models and fitting models may provide different rules of mounting cross, defects in height mounting rules, defects in the position of the equipment onto the face of the user, defect in the brunch orientation, and the like. Height mounting rules may be defined by a distance, as measured in a plane of the lens of the frame, between a cross-mounting point marked on each lens and the bottom of the bounding box defining the lens in the frame. In defining height mounting according to frame sizes and faces sizes, such rules ensure the frame is correctly positioned onto the face. Brunch orientation rules allows for determination of the orientation of the frame on the face in profile images of the user, depending on face morphology (e.g., nose, cheeks, ears,...) and frame sizes. By considering combinations and variations of the above described parameters, (e.g., (1) images of users, (2) images of eyewear, (3) images of filters, and (4) mounting models and/or fitting models) the number of images in a reference database can be appreciably greater than the number of real images that need be acquired.

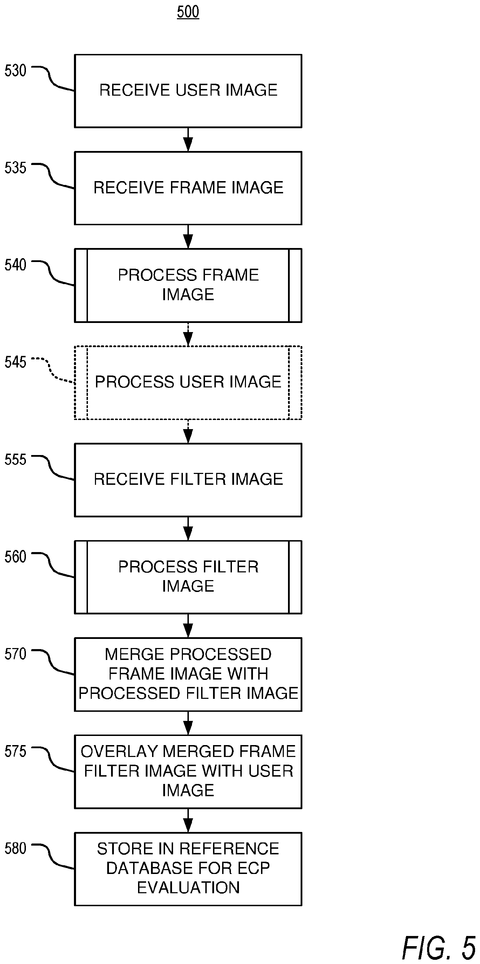

With reference again to the Figures, FIG. 5 provides a flow diagram of a method for expanding a database for evaluation of eyewear compatibility. Though presented as a single example, it can be appreciated that the flow diagram of FIG. 5 can be iteratively performed with myriad combinations of the above-described parameters in order to generate a large reference database.

At step 530 of method 500, a user image is received from an image database. The user image may be one of a plurality of user images within the image database. The user image may be a portrait of the user or a profile of the user and may include a referential landmark for scaling during processing.

At step 535 of method 500, an image of eyewear, or a frame image, is received from the image database. The frame image may be one of a plurality of frame images within the image database. The frame image may be a portrait of the frame or a profile of the frame.

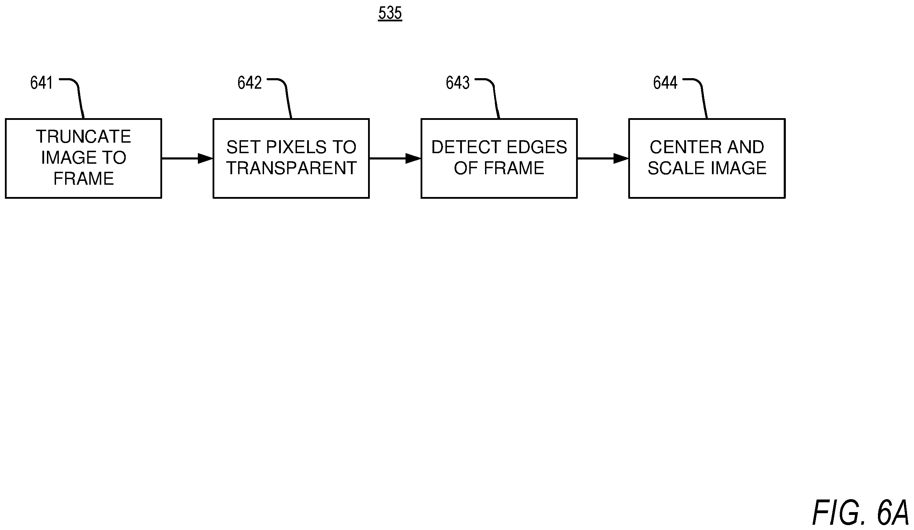

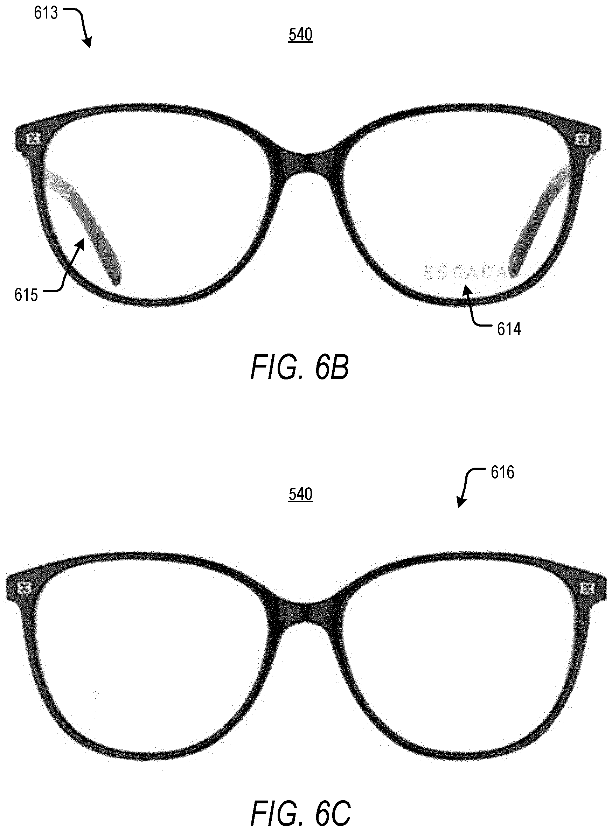

At sub process 540 of method 500, the received frame image is processed. Processing of the received frame image can include defining edges of a frame, thereof, and making transparent pixels that do not describe the frame. Sub process 540 of method 500 will be described in greater detail with reference to FIG. 6A, FIG. 6B, and FIG. 6C.

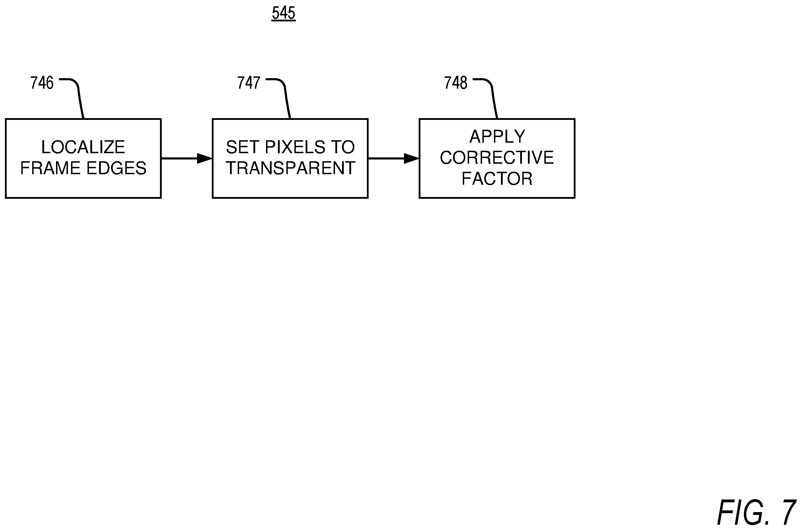

Optionally, at sub process 545 of method 500, the received user image is processed. Processing the received user image may be useful in adjusting the appearance of the eyes of the user as a result of magnification of the lenses of the eyewear. Sub process 545 of method 500 will be described in greater detail with reference to FIG. 7.

At step 555 of method 500, an image of a filter is received from the image database. The filter image may be one of a plurality of filter images within the image database. In an example, the filter image may be reflective of a lens coating or lens treatment, including polarizations, films, mirrors, and the like. The filter image may be a portrait of the filter or a profile of the filter.

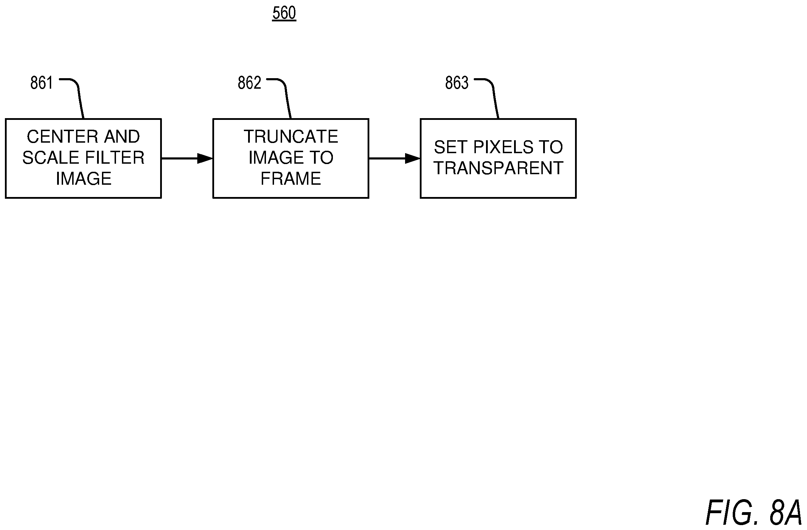

At sub process 560 of method 500, the received filter image is processed. Processing of the received filter image includes centering and scaling the filter image, truncating the filter image according to the defined edges of the frame, and making transparent identified regions of the filter image. A more detailed description of sub process 560 of method 500 will be described with reference to FIG. 8A through FIG. 8D.

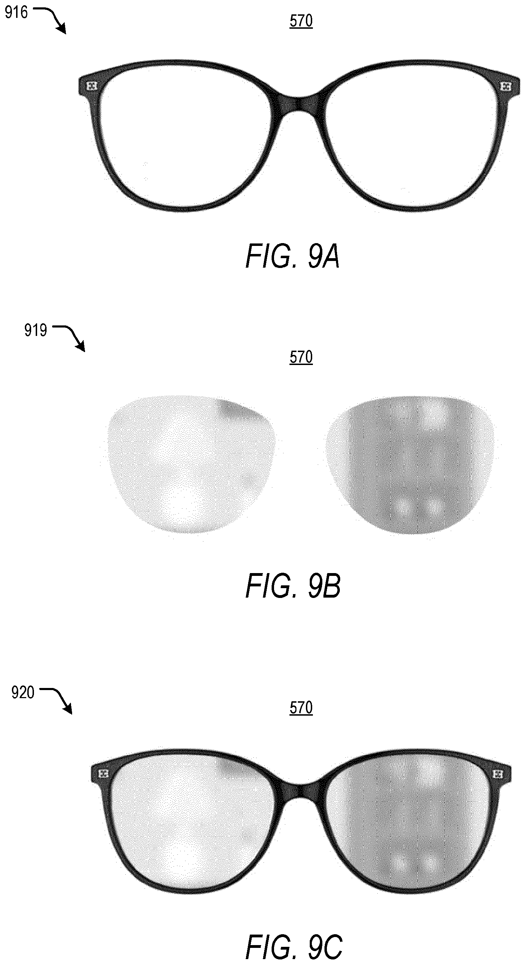

At step 570 of method 500, the frame image processed at sub process 540 and the filter image processed at sub process 560 are merged into a merged filter frame image. Step 570 will be explained in greater detail with reference to FIG. 9A through FIG. 9C.

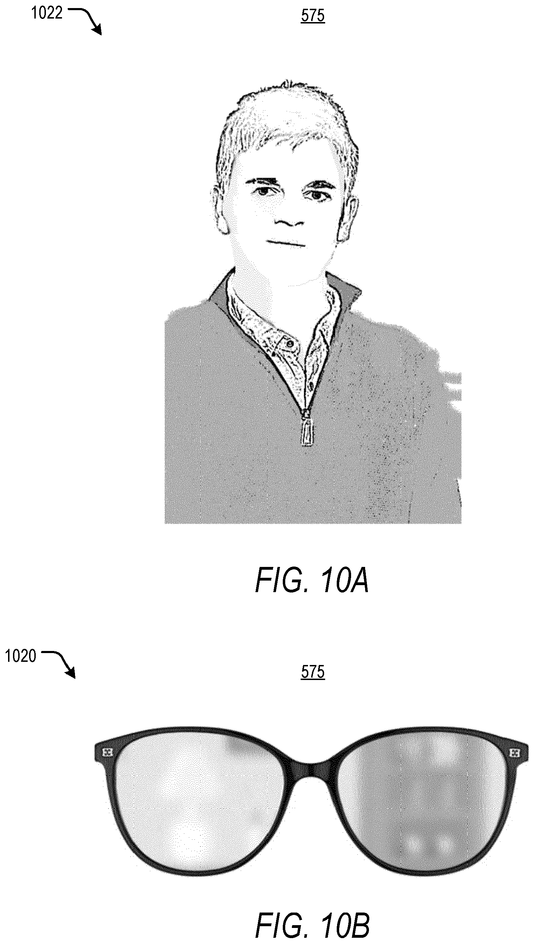

At step 575 of method 500, the merged filter frame image is overlaid on the received, and optionally processed, user image. Step 575 of method 500 will be described in greater detail with reference to FIG. 10A through FIG. 10C.

At step 580 of method 500, the overlaid image can be stored in a reference database for subsequent evaluation by an ECP and the like.

Method 500 may be repeated iteratively until each possible combination of user images, frame images, and filter images is considered. Moreover, each possible combination can be further expanded by consideration of mounting models and fitting models.

The reference database generated at step 580 of method 500, therefore, may comprise a plurality of images of users wearing equipment that have been generated from a limited number of real images of users, images of equipment, and images of filters. In this way, the burden of image acquisition is greatly reduced compared to traditional approaches.

Method 500, described above, will now be considered in view of an embodiment wherein the image of the face of the user is a single image of a portrait of a user, the image of the eyewear is a portrait image of eyewear, and the image of the filter is a portrait image of a filter modeling a coating that may be applied to lens of the eyewear. In an embodiment, the images described above may include two or more images of temples of the eyewear so that these may be accounted for, considering perspective, in rendering of a final image. Additionally, the above-described images can be further considered in view of a predetermined mounting model and/or fitting model. In an example, a mounting model may define height mounting in millimeters as $H = \frac{B}{2} + 4$, where $B$ is an interior vertical size of a circle of the frame. In an example, a fitting model is a law fixing a distance between eye, lens, and pantoscopic angle (i.e., lens tilt) according to morphological sizes (e.g., nose width, nose orientations, ear localization) and frame sizes (e.g., bridge width).

According to an embodiment, and as introduced with respect to FIG. 5, the present disclosure provides a method for processing the frame image, processing the filter image, optionally processing the user image, optionally merging the processed user image with the user image, merging the processed frame image with the processed filter image, and overlaying the merged filter frame image with the optionally processed user image.

With reference to FIG. 6A, FIG. 6B, and FIG. 6C, a frame image 613 may be processed according to sub process 535 of method 500.

At step 641, the frame image 613 may be truncated relative to a bounding box defining the frame of the eyewear in the frame image 613.

At step 642, each pixel that does not correspond to a component of the eyewear, including branches, shadows, and the like, can be set to be transparent. In an example, the branches may be temple components of the frame. This includes pixels located inside 'circles'

(could be other shapes) of the eyewear as well as pixels located outside the 'circles' of the eyewear. The 'circles' may correspond to lenses of the eyewear. In an example, pixel association can be determined by image segmentation techniques including thresholding methods, region growing methods to identify the eyewear, and the like. As in FIG. 6B, this can include temples 615 of the eyewear and branding 614 affiliated with a lens or maker of the eyewear.

At step 643, edges of the eyewear defining the 'circles' of the eyewear may be detected. The edges may define the aperture in which a lens of the eyewear may be inserted. In an embodiment, the edges may be detected as $C_{right}$ and $C_{left}$, wherein $C_{right}$ corresponds to a right circle of the eyewear and $C_{left}$ correspond to a left circle of the eyewear. The edges may be detected via image segmentation techniques including active contour-based segmentation techniques, region growing methods, and the like. In an example, edge detection may be determined by Canny edge detector. The circles of the eyewear, as defined above, will be used during subsequent sub processes as processing boundaries.

At step 644, the frame image 613 may be centered and scaled according to the received user image taking into account the predetermined mounting model and/or fitting model. Centering and scaling of the frame image 613 may be done to correct orientation of the user image and the frame image 613, accounting for differences in perspective, and may properly size the frame of the frame image 613 relative to the face of the user in the user image. The mounting model and/or fitting model may account for possible positions of the frame of the frame image 613 relative to the face of the user in the user image. Scaling of the frame image 613 may be performed according to one or more of a plurality of scaling factors. The scaling factors may include, among others, use of a single, ubiquitous referential landmark of known size in the images or use of a differential measurement between features of the images. For instance, wherein the scaling factor is, as a single, ubiquitous referential landmark, based on a screw head, a true dimensional value of the screw head in millimeters can be correlated with a digital dimensional value of the screw head in pixels. In another instance, wherein the scaling factor is, as a differential measurement between features of the images, based on a pupillary distance, a true pupillary distance in millimeters can be measured by pupilometer and correlated with a digital pupillary distance in pixels measured on the user image. In an embodiment, face detection methods and landmark estimation methods can be applied to the user image, the frame image 613, and the filter image, as appropriate. In an embodiment, regarding pupillary measurements and the user image, palpebral edges of the user in the user image may be detected and gravity centers thereof can be calculated. The gravity centers may then be used as an estimate for pupil centers and correlated with the known pupillary distance as measured by pupilometer and used as a scaling factor. True dimensions, as determined according to the above, can then be extrapolated to other images in a similar manner.

In an example, scaling can be performed to adjust the size of the frame image to the size of the user image. This can be based on pupillary distance in the user image and width of the frame in the frame image, each measured as described above. A normalization of one measured distance to the other results in a scaling factor that may be applied thereto.

As shown in FIG. 6C, a result of sub process 540 of method 500 is a processed frame image 616. The processed frame image 616 may then be subsequently used in method 500.

With reference to FIG. 7, the user image received at step 530 may be optionally processed according to sub process 545 of method 500.

At step 746 of sub process 545, frame edges $C_{right}$ and $C_{left}$, defining zones $C'_{right}$ and $C'_{left}$ and identified in sub process 540 of method 500, can be localized to the user image 746 according to mounting models and/or fitting models.

At step 747 of sub process 545, and similar to step 642 of sub process 540, regions of the user image not described by the defined zones $C'_{right}$ and $C'_{left}$ can be set to be transparent. $C'_{right}$ and $C'_{left}$ may correspond to a right lens and a left lens of the eyewear. In an embodiment, transparency can be modified by evaluating pixels of the user image and identifying those that are outside the frame edges defined by $C_{right}$ and $C_{left}$ and, therefore, not within the defined zones $C'_{right}$ and $C'_{left}$. These identified pixels can be set to be transparent. In an example, pixel identification can be determined by image segmentation techniques including thresholding methods, region growing methods to identify the eyewear, and the like.

At step 748 of sub process 545, a corrective factor may be applied to the defined zones $C'_{right}$ and $C'_{left}$ remaining in the processed user image. By applying a corrective factor, the processed user image may reflect the visual impact of a magnification or minification of eyes of the user by a lens used in the eyewear.

According to an embodiment, the processed user image from step 748 of sub process 545 may then be merged with the user image received at step 530 in order to generate a processed user image that may be finally merged with a merged filter frame image, as will be described later. As sub process 545 of method 500 is optional, the remainder of method 500 will be described excepting this sub process.

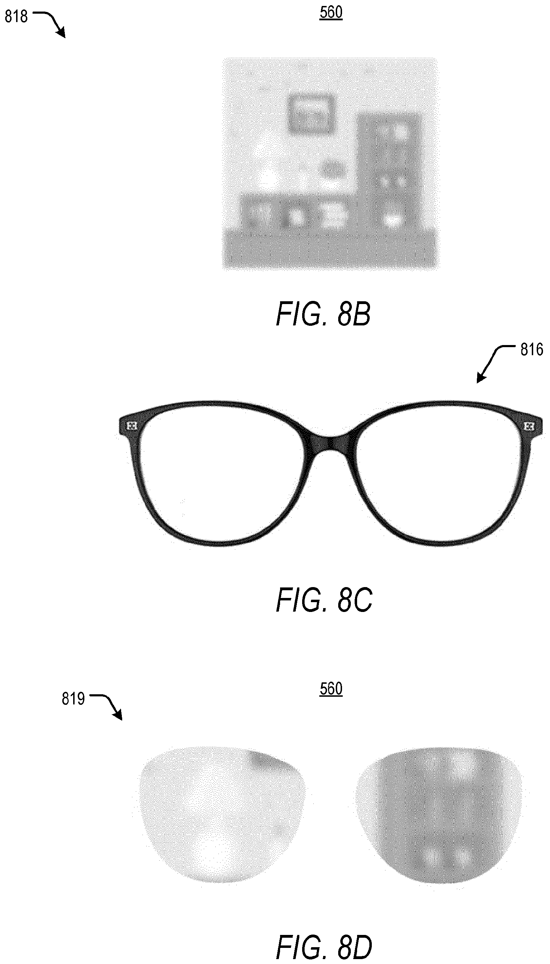

With reference to FIG. 8A, FIG. 8B, FIG. 8C and FIG. 8D, a filter image 818 received at step 555 of method 500 may be processed according to sub process 560 of method 500. In an embodiment, the filter image 818 may represent an image of an environment in which the eyewear will be utilized, the image of the environment being a reflection as perceived by an outside observer. Such an environment may be the inside of a room, as in FIG. 8B, or an outdoors setting. In a non-limiting example, the environment may also be a sunny outdoors location wherein reflections of the sun are present on a polarized lens 'filter'.

At step 861 of sub process 560, the received filter image 818 may be centered and scaled according to the processed frame image of sub process 540 of method 500. An illustration of a processed frame image 816 is shown in FIG. 8C.

At step 862 of sub process 560, and using the bounding box as defined in sub process 540 of method 500, the received filter image 818 may be truncated relative to the bounding box defining the frame of the eyewear in the processed frame image 816.

At step 863 of sub process 560, and based on the frame edges $C_{right}$ and $C_{left}$ defined in sub process 540 of method 500, all pixels outside the frame edges may set to be transparent. In other words, all pixels of the filter image 818 not within zones of the frame image 816 defined as $C'_{right}$ and $C'_{left}$ may be identified and set to be transparent. In an example, pixel identification can be determined by image segmentation techniques including thresholding methods, region growing methods to identify the eyewear, and the like. Therefore, a processed filter image 819, as in FIG. 8D, represents the impact of the filter image 818 with regard to each lens of eyewear.

The processed filter image of sub process 560 may then be provided to step 570 of method 500. As shown in FIG. 9A and FIG. 9B, a processed frame image 916 may be merged with a processed filter image 919 in order to generate a merged filter frame image 920, as shown in FIG. 9C. In an embodiment, merging of the processed frame image 916 and the processed filter image 919 may be performed according to methods understood by one of ordinary skill in the art.

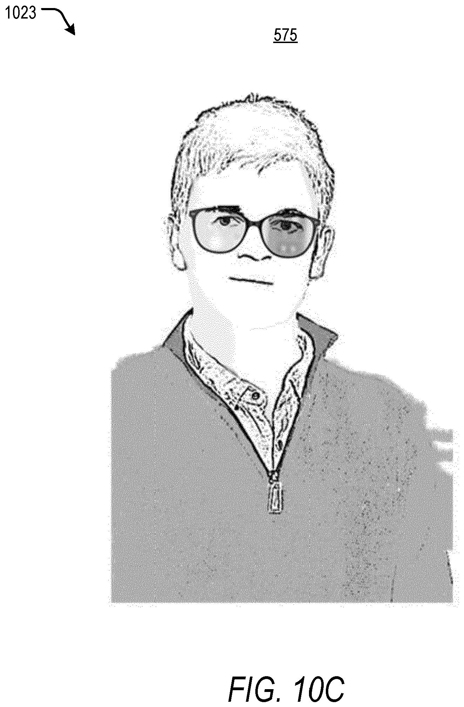

In order to produce an image ready to be stored within a reference database at step 580 of method 500, the merged filter frame image of step 570 of method 500 and the frame image received at step 530 of method 500 can be merged. Accordingly, at step 575 of method 500 and with reference to FIG. 10A, FIG. 10B, and FIG. 10C, a user image 1022 and a merged filter frame image 1020 can be merged to generate the 'virtual try on' image of FIG. 10C. In other words, the merged filter frame image 1020 can be overlaid on the user image 1022, or otherwise merged therewith, in order to generate an overlaid image 1023. The overlaid image 1023 of step 575 shown in FIG. 10C is an exemplary illustration of image of user wearing eyewear that can be generated by method 500 of the present disclosure.

According to an embodiment, overlaid images generated at step 575 of method 500 can then be stored within the reference database at step 580 in order to be further evaluated by ECPs during development of a recommendation model based thereon.

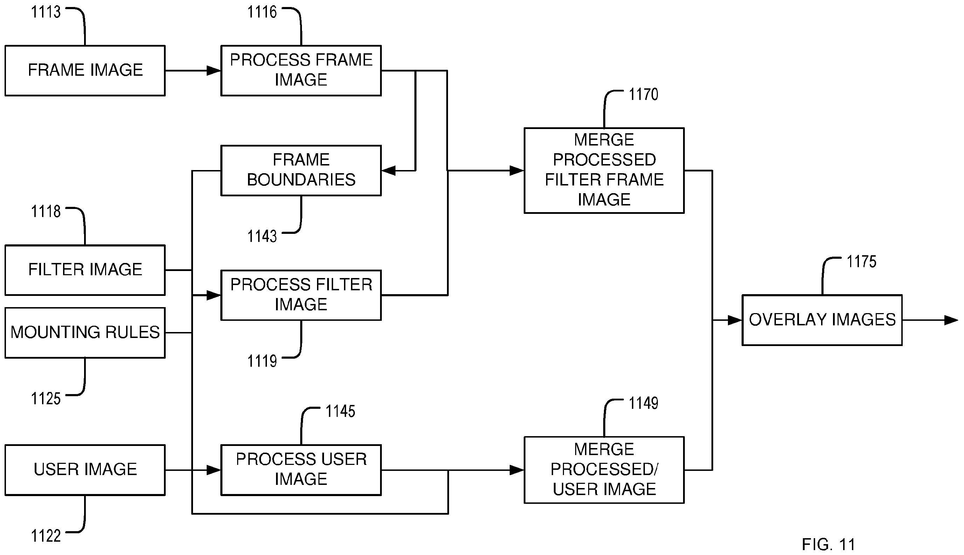

With reference now to FIG. 11, an exemplary flow diagram of the present disclosure will be described. The flow diagram of FIG. 11 is presented differently than the linear flow diagram of FIG. 5 in order to show the non-limiting nature of the flow diagram and what relationships are important.

Initially, a frame image 1113 may be processed 1116 to identify a bounding box, frame edges $C_{right}$ and $C_{left}$, and to prepare the frame to be later merged with a processed filter image. Frame edges $C_{right}$ and $C_{left}$, referred to as frame boundaries 1143, may be used in generating a processed filter image 1119 and a processed user image 1145. Next, in generating the processed filter image 1119, a filter image 1118 may be centered and scaled according to the processed frame image, using the same bounding box and frame boundaries 1143 to define transparent regions of the filter image 1118. Mounting rules and/or fitting rules 1125 may also be considered. The processed frame image 1116 and the processed filter image 1119 may then be merged in order to generate a merged filter frame image 1170. Next, a processed user image 1145 may be generated from a user image 1122. The processed user image 1145 may be generated according to the frame boundaries 1143 and based on a visual prescription of the user. Again, mounting rules and/or fitting rules 1125 may also be considered. The processed user image 1145 may then be merged with the user image 1122 in order to generate a merged user image 1149. Having generated the merged filter frame image 1170 and the merged user image 1149, the images may be finally merged in order to generate an overlaid image. In merging the images, the merged filter frame image 1170 may be overlaid on the merged user image 1149. The overlaid image 1175 may then be stored in a reference database for subsequent evaluation by an ECP during development of a recommendation model.

According to an embodiment, the method of the present disclosure generates a reference database of 'labeled' images by digitally combining a limited number of images of users, images of eyewear, and images of filters according to mounting models and/or fitting models in variations that 'artificially' expand the reference database. To this end, the method generates $N_g * N_f$ images by merging images of eyewear with images of filters, where $N_g$ is the number of images of eyewear and $N_f$ is the number of images of filters. These merged images may contain at least four channels, three for color and one for transparency. The region of the merged image outside a frame of the eyewear, including temples of the eyewear, can be made transparent and the region of the merged image inside the frame of the eyewear can be made semi-transparent, transparent, or not according to the filter image. The method than generates $N_g * N_f * N_a * N_w$ images overlaying the set of merged images with received user images of a face of a user, where $N_w$ is the number of images of users and $N_a$ indicates the consideration of mounting models and/or fitting models. By considering more than one mounting model and/or fitting model, it may be possible to generate a continuous model of structural, positional, and mounting fit of the eyewear on the face of the user based on expert advice, wherein the structural positioning of the eyewear on the face of the user simulates different kinds of mounting or fitting errors. Therefore, it can be appreciated that the methods of the present disclosure allow for a multiplicative impact by providing a single image of a user. The need to acquire thousands of images of users wearing different eyewear is thus eliminated.

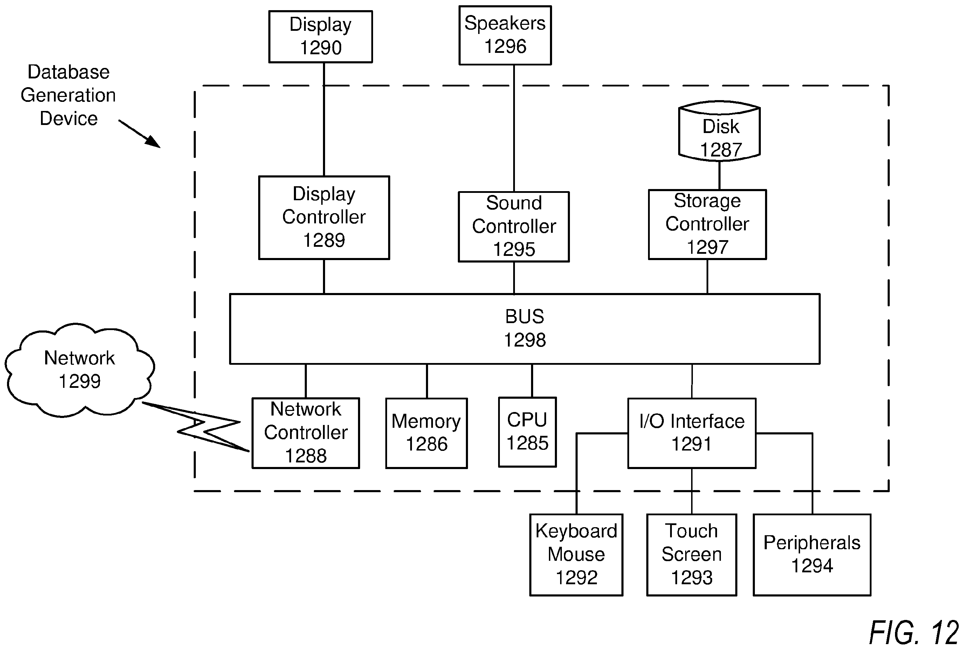

With reference now to FIG. 12, FIG. 12 is a hardware description of a database generation device, according to an exemplary embodiment of the present disclosure.

In FIG. 12, the database generation device includes a CPU 1285 which performs the processes described above. The database generation device may be a general-purpose computer or a particular, special-purpose machine. In one embodiment, the database generation device becomes a particular, special-purpose machine when the processor 1285 is programmed to perform visual equipment selection (and in particular, any of the processes discussed with reference to the above disclosure).

Alternatively, or additionally, the CPU 1285 may be implemented on an FPGA, ASIC, PLD or using discrete logic circuits, as one of ordinary skill in the art would recognize. Further, CPU 1285 may be implemented as multiple processors cooperatively working in parallel to perform the instructions of the inventive processes described above.

The database generation device also includes a network controller 1288, such as an Intel Ethernet PRO network interface card, for interfacing with network 1299. As can be appreciated, the network 1299 can be a public network, such as the Internet, or a private network such as an LAN or WAN network, or any combination thereof and can also include PSTN or ISDN sub-networks. The network 1299 can also be wired, such as an Ethernet network, or can be wireless such as a cellular network including EDGE, 3G and 4G wireless cellular systems. The wireless network can also be WiFi, Bluetooth, or any other wireless form of communication that is known.

The database generation device further includes a display controller 1289, such as a graphics card or graphics adaptor for interfacing with display 1290, such as a monitor. A general purpose I/O interface 1291 interfaces with a keyboard and/or mouse 1292 as well as a touch screen panel 1293 on or separate from display 1290. General purpose I/O interface 1291 also connects to a variety of peripherals 1294 including printers and scanners.

A sound controller 1295 is also provided in the database generation device to interface with speakers/microphone 1296 thereby providing sounds and/or music.

The general purpose storage controller 1297 connects the storage medium disk 1287 with communication bus 1298, which may be an ISA, EISA, VESA, PCI, or similar, for interconnecting all of the components of the database generation device. A description of the general features and functionality of the display 1290, keyboard and/or mouse 1292, as well as the display controller 1289, storage controller 1297, network controller 1288, sound controller 1295, and general purpose I/O interface 1291 is omitted herein for brevity as these features are known.

The exemplary circuit elements described in the context of the present disclosure may be replaced with other elements and structured differently than the examples provided herein. Moreover, circuitry configured to perform features described herein may be implemented in multiple circuit units (e.g., chips), or the features may be combined in circuitry on a single chipset.

The functions and features described herein may also be executed by various distributed components of a system. For example, one or more processors may execute these system functions, wherein the processors are distributed across multiple components communicating in a network. The distributed components may include one or more client and server machines, which may share processing, in addition to various human interface and communication devices (e.g., display monitors, smart phones, tablets, personal digital assistants (PDAs)). The network may be a private network, such as a LAN or WAN, or may be a public network, such as the Internet. Input to the system may be received via direct user input and received remotely either in real-time or as a batch process. Additionally, some implementations may be performed on modules or hardware not identical to those described. Accordingly, other implementations are within the scope that may be claimed.

The invention is defined by the appended claims.

**Claims**

1. A computer- implemented method for expanding an image database for evaluation of eyewear compatibility, comprising:

receiving a user image of a face of a user; receiving a frame image of a frame of eyewear from a plurality of images of frames of eyewear; processing, by processing circuitry, the received frame image by setting, as transparent, pixels of the received frame image except for an anterior face of the frame of the eyewear; processing the received frame image by centering the received frame image based on the received user image and fit models defining mounting the frame of the eyewear on the face of the user, wherein the centering includes centering the received frame image according to an orientation of the face of the user in the received user image; and processing the received frame image by scaling the received frame image based on the received user image and one or more scaling factors, the one or more scaling factors including a pupillary factor, the pupillary factor being a relationship between a real pupillary distance and a digital pupillary distance, the digital pupillary distance being measured on the received frame image; defining, within the processed frame image, a left boundary and a right boundary of the anterior face of the frame of the eyewear, the defined left boundary and the defined right boundary corresponding to the left eye and the right eye, respectively; receiving a filter image of a filter modeling a lens coating of the eyewear; processing, by the processing circuitry, the received filter image by setting, as transparent, pixels in the received filter image outside the frame of the eyewear based on the defined left boundary and the defined right boundary of the anterior face of the frame of the eyewear; centering and scaling the received filter image according to the processed frame image, merging the processed frame image and the processed filter image; and overlaying, by the processing circuitry, the merged processed frame image and the processed filter image onto the received user image of the face of user.

2. The method of claim 1, wherein the receiving includes receiving the frame image of the frame of the eyewear and two or more images of temples of the frame of the eyewear, the two or more images of the temples of the frame of the eyewear being utilized during the overlaying.

3. The method of claim 1 or 2, wherein the digital pupillary distance is determined by
calculating a distance between pupils of eyes of the user, the pupils of the eyes of the user being defined as gravity centers of palpebral fissures of the face of the user.

4. The method of claim 1, further comprising processing the received user image of the face of the user based on the defined left boundary and the defined right boundary of the anterior face of the frame of the eyewear, pixels in the received user image outside the defined left boundary and the defined right boundary being set as transparent.

5. The method of claim 4, further comprising applying a corrective factor to the processed received user image based on a vision prescription of the user.

6. The method of claim 4, further comprising applying a corrective factor to the processed received user image based on a material of the frame of the eyewear of the processed frame image and the filter of the processed filter image.

7. An apparatus for expanding an image database for evaluation of eyewear compatibility, comprising: processing circuitry configured to

receive a user image of a face of a user,
receive a frame image of a frame of eyewear from a plurality of images of frames of eyewear,
process the received frame image by setting, as transparent, pixels of the received frame image except for an anterior face of the frame of the eyewear,
process the received frame image by centering the received frame image based on the received user image and fit models defining mounting the frame of the eyewear on the face of the user, wherein the centering includes centering the received frame image according to an orientation of the face of the user in the received user image, and
process the received frame image by scaling the received frame image based on the received user image and one or more scaling factors, the one or more scaling factors including a pupillary factor, the pupillary factor being a relationship between a real pupillary distance and a digital pupillary distance, the digital pupillary distance being measured on the received frame image,
define, within the processed frame image, a left boundary and a right boundary of the anterior face of the frame of the eyewear, the defined left boundary and the defined right boundary corresponding to the left eye and the right eye, respectively,
receive a filter image of a filter modeling a lens coating of the eyewear,
process the received filter image by setting, as transparent, pixels in the received filter image outside the frame of the eyewear based on the defined left boundary and the defined right boundary of the anterior face of the frame of the eyewear,
center and scale the received filter image according to the processed frame image,
merge the processed frame image and the processed filter image, and
overlay the merged processed frame image and the processed filter image onto the received user image of the face of user.

8. The apparatus of claim 7, wherein the processing circuitry is further configured to process the received frame image by centering the received frame image based on the received user image and fit models defining mounting the frame of the eyewear on the face of the user.

9. The apparatus of claim 7, wherein the processing circuitry is further configured to process the received frame image by scaling the received frame image based on the received user image and one or more scaling factors, the one or more scaling factors including a pupillary factor, the pupillary factor being a relationship between a real pupillary distance and a digital pupillary distance, the digital pupillary distance being measured on the received frame image.

10. The apparatus of claim 7, wherein the processing circuitry is further configured to process the received user image of the face of the user based on the defined left boundary and the defined right boundary of the anterior face of the frame of the eyewear, pixels in the received user image outside the defined left boundary and the defined right boundary being set as transparent.

11. The apparatus of claim 10, wherein the processing circuitry is further configured to apply a corrective factor to the processed received user image based on a vision prescription of the user.

12. A non-transitory computer-readable storage medium storing computer-readable instructions that, when executed by a computer, cause the computer to perform a method for expanding an image database for evaluation of eyewear compatibility, comprising:

receiving a user image of a face of a user;
receiving a frame image of a frame of eyewear from a plurality of images of frames of eyewear;
processing the received frame image by setting, as transparent, pixels of the received frame image except for an anterior face of the frame of the eyewear;
processing the received frame image by centering the received frame image based on the received user image and fit models defining mounting the frame of the eyewear on the face of the user,

wherein the centering includes centering the received frame image according to an orientation of the face of the user in the received user image; and

processing the received frame image by scaling the received frame image based on the received user image and one or more scaling factors, the one or more scaling factors including a pupillary factor, the pupillary factor being a relationship between a real pupillary distance and a digital pupillary distance, the digital pupillary distance being measured on the received frame image defining, within the processed frame image, a left boundary and a right boundary of the anterior face of the frame of the eyewear, the defined left boundary and the defined right boundary corresponding to the left eye and the right eye, respectively;

receiving a filter image of a filter modeling a lens coating of the eyewear;

processing the received filter image by setting, as transparent, pixels in the received filter image outside the frame of the eyewear based on the defined left boundary and the defined right boundary of the anterior face of the frame of the eyewear;

centering and scaling the received filter image according to the processed frame image,

merging the processed frame image and the processed filter image; and

overlaying the merged processed frame image and the processed filter image onto the received user image of the face of user.

## Patentansprüche

1.  Computerimplementiertes Verfahren zum Erweitern einer Bilddatenbank zur Evaluierung von Brillenkompatibilität, umfassend:

    Empfangen eines Nutzerbilds eines Gesichts eines Nutzers;
    Empfangen eines Rahmenbilds eines Rahmens einer Brille von mehreren Bildern von Rahmen einer Brille;
    Verarbeiten, durch eine Verarbeitungsschaltungsanordnung, des empfangenen Rahmenbilds durch Setzen, als transparent, von Pixeln des empfangenen Rahmenbilds außer einer Vorderfläche des Rahmens der Brille;
    Verarbeiten des empfangenen Rahmenbilds durch Zentrieren des empfangenen Rahmenbilds auf Basis des empfangenen Nutzerbilds und Anpassen von Modellen unter Definierung des Setzens des Rahmens der Brille auf das Gesicht des Nutzers,
wobei das Zentrieren das Zentrieren des empfangenen Rahmenbilds gemäß einer Orientierung des Gesichts des Nutzers in dem empfangenen Nutzerbild beinhaltet; und
Verarbeiten des empfangenen Rahmenbilds durch Skalieren des empfangenen Rahmenbilds auf Basis des empfangenen Nutzerbilds und einem oder mehreren Skalierungsfaktoren, wobei der eine oder die mehreren Skalierungsfaktoren einen Pupillenfaktor beinhalten, wobei der Pupillenfaktor eine Beziehung zwischen einer realen Pupillendistanz und einer digitalen Pupillendistanz ist, wobei die digitale Pupillendistanz an dem empfangenen Rahmenbild gemessen wird;
Definieren, innerhalb des verarbeiteten Rahmenbilds, einer linken Grenze und einer rechten Grenze der Vorderfläche des Rahmens der Brille, wobei die definierte linke Grenze und die definierte rechte Grenze dem linken Auge bzw. dem rechten Auge entsprechen;
Empfangen eines Filterbilds einer Filtermodellierung einer Linsenbeschichtung der Brille;
Verarbeiten, durch die Verarbeitungsschaltungsanordnung, des empfangenen Filterbilds durch Setzen, als transparent, von Pixeln in dem empfangenen Filterbild außerhalb des Rahmens der Brille auf Basis der definierten linken Grenze und der definierten rechten Grenze der Vorderfläche des Rahmens der Brille;
Zentrieren und Skalieren des empfangenen Filterbilds gemäß dem verarbeiteten Rahmenbild,
Verschmelzen des verarbeiteten Rahmenbilds und des verarbeiteten Filterbilds; und
Überlagern, durch die Verarbeitungsschaltungsanordnung, des verschmolzenen verarbeiteten Rahmenbilds und des verarbeiteten Filterbilds auf das empfangene Nutzerbild des Gesichts des Nutzers.

2.  Verfahren nach Anspruch 1, wobei das Empfangen das Empfangen des Rahmenbilds des Rahmens der Brille und von zwei oder mehr Bildern von Bügeln des Rahmens der Brille beinhaltet, wobei die zwei oder mehr Bilder der Bügel des Rahmens der Brille während des Überlagerns genutzt werden.

3.  Verfahren nach Anspruch 1 oder 2, wobei die digitale Pupillendistanz bestimmt wird durch Berechnen einer Distanz zwischen Pupillen von Augen des Nutzers, wobei die Pupillen der Augen des Nutzers als Schwerpunkte von Lidspalten des Gesichts des Nutzers definiert sind.

4.  Verfahren nach Anspruch 1, weiter umfassend das Verarbeiten des empfangenen Nutzerbilds des Gesichts des Nutzers auf Basis der definierten linken Grenze und der definierten rechten Grenze der Vorderfläche des Rahmens der Brille, wobei Pixel in dem empfangenen Nutzerbild außerhalb der definierten linken Grenze und der definierten rechten Grenze als transparent gesetzt werden.

5. Verfahren nach Anspruch 4, weiter umfassend das Anwenden eines Korrekturfaktors auf das verarbeitete empfangene Nutzerbild auf Basis einer Sehverordnung des Nutzers.

6. Verfahren nach Anspruch 4, weiter umfassend das Anwenden eines Korrekturfaktors auf das verarbeitete empfangene Nutzerbild auf Basis eines Materials des Rahmens der Brille des verarbeiteten Rahmenbilds und des Filters des verarbeiteten Filterbilds.

7. Vorrichtung zum Erweitern einer Bilddatenbank zur Evaluierung von Brillenkompatibilität, umfassend: eine Verarbeitungsschaltungsanordnung, die ausgelegt ist zum

Empfangen eines Nutzerbilds eines Gesichts eines Nutzers;
Empfangen eines Rahmenbilds eines Rahmens einer Brille von mehreren Bildern von Rahmen einer Brille;
Verarbeiten des empfangenen Rahmenbilds durch Setzen, als transparent, von Pixeln des empfangenen Rahmenbilds außer einer Vorderfläche des Rahmens der Brille;
Verarbeiten des empfangenen Rahmenbilds durch Zentrieren des empfangenen Rahmenbilds auf Basis des empfangenen Nutzerbilds und Anpassen von Modellen unter Definierung des Setzens des Rahmens der Brille auf das Gesicht des Nutzers,
wobei das Zentrieren das Zentrieren des empfangenen Rahmenbilds gemäß einer Orientierung des Gesichts des Nutzers in dem empfangenen Nutzerbild beinhaltet; und
Verarbeiten des empfangenen Rahmenbilds durch Skalieren des empfangenen Rahmenbilds auf Basis des empfangenen Nutzerbilds und einem oder mehreren Skalierungsfaktoren, wobei der eine oder die mehreren Skalierungsfaktoren einen Pupillenfaktor beinhalten, wobei der Pupillenfaktor eine Beziehung zwischen einer realen Pupillendistanz und einer digitalen Pupillendistanz ist, wobei die digitale Pupillendistanz an dem empfangenen Rahmenbild gemessen wird;
Definieren, innerhalb des verarbeiteten Rahmenbilds, einer linken Grenze und einer rechten Grenze der Vorderfläche des Rahmens der Brille, wobei die definierte linke Grenze und die definierte rechte Grenze dem linken Auge bzw. dem rechten Auge entsprechen;
Empfangen eines Filterbilds einer Filtermodellierung einer Linsenbeschichtung der Brille;
Verarbeiten des empfangenen Filterbilds durch Setzen, als transparent, von Pixeln in dem empfangenen Filterbild außerhalb des Rahmens der Brille auf Basis der definierten linken Grenze und der definierten rechten Grenze der Vorderfläche des Rahmens der Brille;
Zentrieren und Skalieren des empfangenen Filterbilds gemäß dem verarbeiteten Rahmenbild,
Verschmelzen des verarbeiteten Rahmenbilds und des verarbeiteten Filterbilds; und
Überlagern des verschmolzenen verarbeiteten Rahmenbilds und des verarbeiteten Filterbilds auf das empfangene Nutzerbild des Gesichts des Nutzers.

8. Vorrichtung nach Anspruch 7, wobei die Verarbeitungsschaltungsanordnung weiter ausgelegt ist zum Verarbeiten des empfangenen Rahmenbilds durch Zentrieren des empfangenen Rahmenbilds auf Basis des empfangenen Nutzerbilds und Anpassen von Modellen unter Definierung des Setzens des Rahmens der Brille auf das Gesicht des Nutzers.

9. Vorrichtung nach Anspruch 7, wobei die Verarbeitungsschaltung weiter ausgelegt ist zum Verarbeiten des empfangenen Rahmenbilds durch Skalieren des empfangenen Rahmenbilds auf Basis des empfangenen Nutzerbilds und einem oder mehreren Skalierungsfaktoren, wobei der eine oder die mehreren Skalierungsfaktoren einen Pupillenfaktor beinhalten, wobei der Pupillenfaktor eine Beziehung zwischen einer realen Pupillendistanz und einer digitalen Pupillendistanz ist, wobei die digitale Pupillendistanz an dem empfangenen Rahmenbild gemessen wird.

10. Vorrichtung nach Anspruch 7, wobei die Verarbeitungsschaltungsanordnung weiter ausgelegt ist zum Verarbeiten des empfangenen Nutzerbilds des Gesichts des Nutzers auf Basis der definierten linken Grenze und der definierten rechten Grenze der Vorderfläche des Rahmens der Brille, wobei Pixel in dem empfangenen Nutzerbild außerhalb der definierten linken Grenze und der definierten rechten Grenze als transparent gesetzt werden.

11. Vorrichtung nach Anspruch 10, wobei die Verarbeitungsschaltungsanordnung weiter ausgelegt ist zum Anwenden eines Korrekturfaktors auf das verarbeitete empfangene Nutzerbild auf Basis einer Sehverordnung des Nutzers.

12. Nicht-vorübergehendes computerlesbares Ablagemedium, das computerlesbare Anweisungen speichert, die bei Ausführung durch einen Computer bewirken, dass der Computer ein Verfahren zum Erweitern einer Bilddatenbank zum Evaluieren von Brillenkompatibilität durchführt, umfassend:

Empfangen eines Nutzerbilds eines Gesichts eines Nutzers;

Empfangen eines Rahmenbilds eines Rahmens einer Brille von mehreren Bildern von Rahmen einer Brille;

Verarbeiten des empfangenen Rahmenbilds durch Setzen, als transparent, von Pixeln des empfangenen Rahmenbilds außer einer Vorderfläche des Rahmens der Brille;

Verarbeiten des empfangenen Rahmenbilds durch Zentrieren des empfangenen Rahmenbilds auf Basis des empfangenen Nutzerbilds und Anpassen von Modellen unter Definierung des Setzens des Rahmens der Brille auf das Gesicht des Nutzers,

wobei das Zentrieren das Zentrieren des empfangenen Rahmenbilds gemäß einer Orientierung des Gesichts des Nutzers in dem empfangenen Nutzerbild beinhaltet; und

Verarbeiten des empfangenen Rahmenbilds durch Skalieren des empfangenen Rahmenbilds auf Basis des empfangenen Nutzerbilds und einem oder mehreren Skalierungsfaktoren, wobei der eine oder die mehreren Skalierungsfaktoren einen Pupillenfaktor beinhalten, wobei der Pupillenfaktor eine Beziehung zwischen einer realen Pupillendistanz und einer digitalen Pupillendistanz ist, wobei die digitale Pupillendistanz an dem empfangenen Rahmenbild gemessen wird;

Definieren, innerhalb des verarbeiteten Rahmenbilds, einer linken Grenze und einer rechten Grenze der Vorderfläche des Rahmens der Brille, wobei die definierte linke Grenze und die definierte rechte Grenze dem linken Auge bzw. dem rechten Auge entsprechen;

Empfangen eines Filterbilds einer Filtermodellierung einer Linsenbeschichtung der Brille;

Verarbeiten des empfangenen Filterbilds durch Setzen, als transparent, von Pixeln in dem empfangenen Filterbild außerhalb des Rahmens der Brille auf Basis der definierten linken Grenze und der definierten rechten Grenze der Vorderfläche des Rahmens der Brille;

Zentrieren und Skalieren des empfangenen Filterbilds gemäß dem verarbeiteten Rahmenbild, Verschmelzen des verarbeiteten Rahmenbilds und des verarbeiteten Filterbilds; und

Überlagern des verschmolzenen verarbeiteten Rahmenbilds und des verarbeiteten Filterbilds auf das empfangene Nutzerbild des Gesichts des Nutzers.

## Revendications

1. Procédé mis en œuvre par ordinateur pour étendre une base de données d'images pour l'évaluation de la compatibilité de lunettes, le procédé comprenant les étapes suivantes :

recevoir une image d'utilisateur d'un visage d'un utilisateur ;

recevoir une image de monture d'une monture de lunettes à partir d'une pluralité d'images de montures de lunettes ;

traiter, par des circuits de traitement, l'image de la monture reçue en définissant comme transparents les pixels de l'image de la monture reçue à l'exception d'une face antérieure de la monture de lunettes ;

traiter l'image de la monture reçue en centrant l'image de la monture reçue sur la base de l'image de l'utilisateur reçue et de modèles d'ajustement définissant la mise en place de la monture des lunettes sur le visage de l'utilisateur, où le centrage comprend le centrage de l'image de la monture reçue selon une orientation du visage de l'utilisateur dans l'image d'utilisateur reçue ; et traiter l'image de la monture reçue en mettant à l'échelle l'image de la monture reçue sur la base de l'image de l'utilisateur reçue et d'un ou plusieurs facteurs d'échelle, les un ou plusieurs facteurs d'échelle comprenant un facteur pupillaire, le facteur pupillaire étant une relation entre une distance pupillaire réelle et une distance pupillaire numérique, la distance pupillaire numérique étant mesurée sur l'image de la monture reçue ;

définir, dans l'image de la monture traitée, une limite gauche et une limite droite de la face antérieure de la monture des lunettes, la limite gauche définie et la limite droite définie correspondant à l'œil gauche et à l'œil droit, respectivement ;

recevoir une image de filtre d'un filtre modélisant un revêtement des verres des lunettes ;

traiter, par les circuits de traitement, de l'image de filtre reçue en définissant comme transparents les pixels dans l'image de filtre reçue à l'extérieur de la monture des lunettes sur la base de la limite gauche définie et de la limite droite définie de la face antérieure de la monture des lunettes ;

centrer et mettre à l'échelle l'image de filtre reçue selon l'image de monture traitée, fusionner l'image de monture traitée et l'image de filtre traitée ; et

superposer, par les circuits de traitement, l'image de monture traitée et l'image de filtre traitée fusionnées sur l'image d'utilisateur reçue du visage de l'utilisateur.

**2.** Procédé selon la revendication 1, dans lequel la réception comprend de recevoir l'image de la monture des lunettes et de deux images, ou davantage, des branches de la monture des lunettes, les deux images, ou davantage, des branches de la monture des lunettes étant utilisées pendant la superposition.

**3.** Procédé selon la revendication 1 ou la revendication 2, dans lequel l'écart pupillaire numérique est déterminé en calculant une distance entre les pupilles des yeux de l'utilisateur, les pupilles des yeux de l'utilisateur étant définies comme des centres de gravité des fentes palpébrales du visage de l'utilisateur.

**4.** Procédé selon la revendication 1, comprenant en outre de traiter l'image d'utilisateur reçue du visage de l'utilisateur sur la base de la limite gauche définie et de la limite droite définie de la face antérieure de la monture des lunettes, les pixels dans l'image d'utilisateur reçue à l'extérieur de la limite gauche définie et de la limite droite définie étant définis comme transparents.

**5.** Procédé selon la revendication 4, comprenant en outre d'appliquer un facteur de correction à l'image d'utilisateur reçue traitée, sur la base d'une prescription de correction de la vue de l'utilisateur.

**6.** Procédé selon la revendication 4, comprenant en outre d'appliquer un facteur de correction à l'image d'utilisateur reçue traitée sur la base d'un matériau de la monture des lunettes de l'image de monture traitée et du filtre de l'image de filtre traitée.

**7.** Appareil pour étendre une base de données d'images pour l'évaluation de la compatibilité de lunettes, l'appareil comprenant :
des circuits de traitement configurés pour :

recevoir une image d'utilisateur d'un visage d'un utilisateur,
recevoir une image de monture d'une monture de lunettes à partir d'une pluralité d'images de montures de lunettes,
traiter l'image de la monture reçue en définissant comme transparents les pixels de l'image de la monture reçue à l'exception d'une face antérieure de la monture de lunettes,
traiter l'image de la monture reçue en centrant l'image de la monture reçue sur la base de l'image de l'utilisateur reçue et de modèles d'ajustement définissant la mise en place de la monture des lunettes sur le visage de l'utilisateur,
où le centrage comprend le centrage de l'image de la monture reçue selon une orientation du visage de l'utilisateur dans l'image d'utilisateur reçue, et
traiter l'image de la monture reçue en mettant à l'échelle l'image de la monture reçue sur la base de l'image de l'utilisateur reçue et d'un ou plusieurs facteurs d'échelle, les un ou plusieurs facteurs d'échelle comprenant un facteur pupillaire, le facteur pupillaire étant une relation entre une distance pupillaire réelle et une distance pupillaire numérique, la distance pupillaire numérique étant mesurée sur l'image de la monture reçue,
définir, dans l'image de la monture traitée, une limite gauche et une limite droite de la face antérieure de la monture des lunettes, la limite gauche définie et la limite droite définie correspondant à l'œil gauche et à l'œil droit, respectivement,
recevoir une image de filtre d'un filtre modélisant un revêtement des verres des lunettes,
traiter l'image de filtre reçue en définissant comme transparents les pixels dans l'image de filtre reçue à l'extérieur de la monture des lunettes sur la base de la limite gauche définie et de la limite droite définie de la face antérieure de la monture des lunettes,
centrer et mettre à l'échelle l'image de filtre reçue selon l'image de monture traitée,
fusionner l'image de monture traitée et l'image de filtre traitée, et
superposer l'image de monture traitée et l'image de filtre traitée fusionnées sur l'image d'utilisateur reçue du visage de l'utilisateur.

**8.** Appareil selon la revendication 7, dans lequel les circuits de traitement sont en outre configurés pour traiter l'image de la monture reçue en centrant l'image de la monture reçue sur la base de l'image d'utilisateur reçue et des modèles d'ajustement définissant la mise en place de la monture des lunettes sur le visage de l'utilisateur.

**9.** Appareil selon la revendication 7, dans lequel les circuits de traitement sont en outre configurés pour traiter l'image de la monture reçue en mettant à l'échelle l'image de la monture reçue sur la base de l'image d'utilisateur reçue et d'un ou plusieurs facteurs d'échelle, les un ou plusieurs facteurs d'échelle comprenant un facteur pupillaire, le facteur pupillaire étant une relation entre un écart pupillaire réel et un écart pupillaire numérique, l'écart pupillaire numérique étant mesuré sur l'image de la monture reçue.

**10.** Appareil selon la revendication 7, dans lequel les circuits de traitement sont en outre configurés pour traiter l'image d'utilisateur reçue du visage de l'utilisateur sur la base de la limite gauche définie et de la limite droite définie de la face antérieure de la monture des lunettes, les pixels dans l'image utilisateur reçue à l'extérieur de la limite gauche définie et de la limite droite définie étant définis comme transparents.

**11.** Appareil selon la revendication 10, dans lequel les circuits de traitement sont en outre configurés pour appliquer un facteur de correction à l'image d'utilisateur reçue traitée, sur la base d'une prescription de correction de la vue de l'utilisateur.

**12.** Support de stockage non transitoire lisible par ordinateur stockant des instructions lisibles par ordinateur qui, lorsqu'elles sont exécutées par un ordinateur, amènent l'ordinateur à exécuter un procédé pour étendre une base de données d'images pour l'évaluation de la compatibilité de lunettes, le procédé comprenant les étapes suivantes :

recevoir une image d'utilisateur d'un visage d'un utilisateur ;

recevoir une image de monture d'une monture de lunettes à partir d'une pluralité d'images de montures de lunettes ;

traiter l'image de la monture reçue en définissant comme transparents les pixels de l'image de la monture reçue à l'exception d'une face antérieure de la monture de lunettes ;

traiter l'image de la monture reçue en centrant l'image de la monture reçue sur la base de l'image de l'utilisateur reçue et de modèles d'ajustement définissant la mise en place de la monture des lunettes sur le visage de l'utilisateur,

où le centrage comprend le centrage de l'image de la monture reçue selon une orientation du visage de l'utilisateur dans l'image d'utilisateur reçue ; et

traiter l'image de la monture reçue en mettant à l'échelle l'image de la monture reçue sur la base de l'image de l'utilisateur reçue et d'un ou plusieurs facteurs d'échelle, les un ou plusieurs facteurs d'échelle comprenant un facteur pupillaire, le facteur pupillaire étant une relation entre une distance pupillaire réelle et une distance pupillaire numérique, la distance pupillaire numérique étant mesurée sur l'image de la monture reçue ;

définir, dans l'image de la monture traitée, une limite gauche et une limite droite de la face antérieure de la monture des lunettes, la limite gauche définie et la limite droite définie correspondant à l'œil gauche et à l'œil droit, respectivement ;

recevoir une image de filtre d'un filtre modélisant un revêtement des verres des lunettes ;

traiter l'image de filtre reçue en définissant comme transparents les pixels dans l'image de filtre reçue à l'extérieur de la monture des lunettes sur la base de la limite gauche définie et de la limite droite définie de la face antérieure de la monture des lunettes ;

centrer et mettre à l'échelle l'image de filtre reçue selon l'image de monture traitée,

fusionner l'image de monture traitée et l'image de filtre traitée ; et

superposer l'image de monture traitée et l'image de filtre traitée fusionnées sur l'image d'utilisateur reçue du visage de l'utilisateur.

103

FIG. 1

FIG. 2

FIG. 3

403  410  408

SPECIFIC CRITERIA

1/ Relative to the width of the face of the user, how do you evaluate the width of the equipment ?
-5 : Too small        0 : Okay        5 : Too large
○ ○ ○ ○ ○ ● ○ ○ ○ ○ ○

2/ Relative to the caliber of the equipment, how do you evaluate the pupils of the user ?
-5 : Too internal        0 : Okay        5 : Too external
○ ○ ○ ○ ○ ● ○ ○ ○ ○ ○

3/ What do you think about the position of the external corners of the eyebrows of the user relative to the caliber of the equipment ?
-5 : Too internal        0 : Okay        5 : Too external
○ ○ ○ ○ ○ ● ○ ○ ○ ○ ○

4/ Relative to the eyebrows of the user, how do you evaluate the position of the top of the frame of the equipement ?
-5 : Too low        0 : Okay        5 : Too high
○ ○ ○ ○ ○ ◉ ○ ○ ○ ○ ○

5/ Relative to the cheeks of the user, how do you evaluate the position of the bottom of the frame of the equipment ?
-5 : Too low        0 : Okay        5 : Too high
○ ○ ○ ○ ◉ ○ ○ ○ ○ ○ ○

6/ Relative to the nose of the wearer, how do you evaluate the bridge of the frame of the equipment ?
-5 : Too narrow        0 : Okay        5 : Too large
○ ○ ○ ○ ○ ◉ ○ ○ ○ ○ ○

411

GLOBAL CRITERION

○    ○    In terms of sizes, does the frame that this person is wearing suit him?
YES   NO

*FIG. 4*

EP 3 843 043 B1

500

```
530 ──┐  ┌─────────────────────────┐
        │   RECEIVE USER IMAGE     │
        └─────────────────────────┘
                    │
                    ▼
535 ──┐  ┌─────────────────────────┐
        │   RECEIVE FRAME IMAGE    │
        └─────────────────────────┘
                    │
                    ▼
540 ──┐  ┌─────────────────────────┐
        │     PROCESS FRAME        │
        │        IMAGE             │
        └─────────────────────────┘
                    ┊
                    ▼
545 ┄┄┐  ┌┄┄┄┄┄┄┄┄┄┄┄┄┄┄┄┄┄┄┄┄┄┄┄┄┄┐
        ┊    PROCESS USER IMAGE    ┊
        └┄┄┄┄┄┄┄┄┄┄┄┄┄┄┄┄┄┄┄┄┄┄┄┄┄┘
                    │
                    ▼
555 ──┐  ┌─────────────────────────┐
        │   RECEIVE FILTER IMAGE   │
        └─────────────────────────┘
                    │
                    ▼
560 ──┐  ┌─────────────────────────┐
        │     PROCESS FILTER       │
        │        IMAGE             │
        └─────────────────────────┘
                    │
                    ▼
570 ──┐  ┌─────────────────────────┐
        │    MERGE PROCESSED       │
        │    FRAME IMAGE WITH      │
        │  PROCESSED FILTER IMAGE  │
        └─────────────────────────┘
                    │
                    ▼
575 ──┐  ┌─────────────────────────┐
        │  OVERLAY MERGED FRAME    │
        │  FILTER IMAGE WITH USER  │
        │        IMAGE             │
        └─────────────────────────┘
                    │
                    ▼
580 ──┐  ┌─────────────────────────┐
        │   STORE IN REFERENCE     │
        │   DATABASE FOR ECP       │
        │      EVALUATION          │
        └─────────────────────────┘
```

*FIG. 5*

535

641 — TRUNCATE IMAGE TO FRAME

642 — SET PIXELS TO TRANSPARENT

643 — DETECT EDGES OF FRAME

644 — CENTER AND SCALE IMAGE

FIG. 6A

613

540

615

614

## FIG. 6B

540

616

## FIG. 6C

746 — LOCALIZE FRAME EDGES → 747 — SET PIXELS TO TRANSPARENT → 748 — APPLY CORRECTIVE FACTOR

*FIG. 7*

EP 3 843 043 B1

EP 3 843 043 B1

560

861

862

863

CENTER AND
SCALE FILTER
IMAGE

TRUNCATE
IMAGE TO
FRAME

SET PIXELS TO
TRANSPARENT

*FIG. 8A*

818

<u>560</u>

## FIG. 8B

816

## FIG. 8C

819

<u>560</u>

## FIG. 8D

916 →

570

FIG. 9A

919 →

570

FIG. 9B

920 →

570

FIG. 9C

1022

575

FIG. 10A

1020

575

FIG. 10B

1023

575

FIG. 10C

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012313955 A